Europäisches Patentamt

European Patent Office

Office européen des brevets

(19)

(11) Veröffentlichungsnummer: **0 164 447**
**B1**

(12) **EUROPÄISCHE PATENTSCHRIFT**

(45) Veröffentlichungstag der Patentschrift:
30.03.88

(51) Int. Cl.⁴: **F 16 C 35/077**

(21) Anmeldenummer: **84115574.0**

(22) Anmeldetag: **17.12.84**

(54) **Lageranordnung.**

(30) Priorität: **30.05.84 DE 8416631 U**

(43) Veröffentlichungstag der Anmeldung:
**18.12.85 Patentblatt 85/51**

(45) Bekanntmachung des Hinweises auf die Patenterteilung:
**30.03.88 Patentblatt 88/13**

(84) Benannte Vertragsstaaten:
**AT CH DE FR GB IT LI SE**

(56) Entgegenhaltungen:
**DE - A - 2 847 979**
**DE - B - 1 078 382**
**FR - A - 2 030 880**
**FR - A - 2 065 887**
**GB - A - 647 187**

(73) Patentinhaber: **Siemens Aktiengesellschaft Berlin und München, Wittelsbacherplatz 2, D-8000 München 2 (DE)**

(72) Erfinder: **Wagner, Herbert, Dipl.-Ing. (FH), Rennweg 5, D-8740 Bad Neustadt/Saale (DE)**

**Beschreibung**

Die Erfindung betrifft eine Lageranordnung mit einem in einer Bohrung einer Lageraufnahme angeordneten Wälzlager, bei welcher Anordnung zwischen dem Aussenring des Wälzlagers und der Bohrungswand ein mit einem quer zur Umfangsrichtung verlaufenden Trennschlitz versehenes Federband eingefügt ist.

Eine solche Lageranordnung ist durch die GB-A-647 187 bekannt. Bei dieser Anordnung ist das zur Verdrehsicherung des Wälzlagers dienende Federband entweder kontinuierlich kreisförmig gebogen oder als Polygon ausgebildet. Ausserdem ist das Federband bei einer Ausführungsvariante mit sich nach radial innen erstreckenden Flanschen versehen. Um ein derartig ausgebildetes Federband auf den Aussenring des Wälzlagers aufbringen zu können, muss ein Trennschlitz vorgesehen werden, der eine Durchmesservergrösserung des Federbandes durch entsprechendes Aufbiegen ermöglicht. Die Herstellung eines solchen Federbandes ist entsprechend aufwendig.

Dies gilt auch für ein bei einer durch die DE-B-1 078 382 bekannten Lageranordnung verwendetes wellenförmig ausgebildetes Federband. Ein solches Federband muss in einem gesonderten Arbeitsgang wellenförmig gebogen werden.

Durch die DE-A-2 847 079 ist eine weitere Lageranordnung bekannt, bei der als federndes Element ein Blechstreifen vorgesehen ist, an dem sich nahezu über dessen volle Breite erstreckende Sicken derart ausgebildet sind, dass der Blechstreifen mit den Sicken an dem Aussenumfang des Lageraussenringes und mit den zu beiden Seiten der Sicken verbleibenden Umfangsstegen an der Wand der Lagerbohrung anliegt. Da die Sicken in radialer Richtung nachgiebig sind, entsteht eine Federwirkung des Blechstreifens. Die Sicken müssen in einem entsprechenden Arbeitsgang an dem Blechstreifen ausgebildet werden.

Der Erfindung liegt die Aufgabe zugrunde, bei einer Lageranordnung der eingangs beschriebenen Art, den Herstellungsaufwand für das der Verdrehsicherung dienende Federband zu vermindern.

Die Lösung der gestellten Aufgabe gelingt nach der Erfindung dadurch, dass das Federband aus einem geraden, im wesentlichen flachen, in seiner Länge dem Bohrungsumfang entsprechenden Stahlband besteht. Die beiden Enden eines solchen Federbandes erstrecken sich nach dem Einsetzen in die Lagerbohrung zwangsläufig geradlinig. Beim Einbringen des Wälzlagers werden dann die Enden und weitere durch Walz- und Schneidspannungen an dem Federband entstandene Wölbungen an die Bohrungswand angedrückt und liegen somit unter Spannung an dem Aussenring an, der hierdurch gegen Verdrehen gesichert wird.

Eine einfache axiale Befestigung des Federbandes ist dadurch möglich, dass an der einen Längsseite des Federbandes nach aussen aus dessen Ebene vorstehende Sicken vorgesehen sind, die in eine an der Bohrungswand ausgebildete Freidrehung eingreifen. Da bei Lagerbohrungen üblicherweise Freidrehungen vorhanden sind, erübrigt sich somit eine gesondert herzustellende Vertiefung für die axiale Befestigung des Federbandes.

Anhand eines in der Zeichnung dargestellten Ausführungsbeispiels wird der Anmeldungsgegenstand nachfolgend näher beschrieben. Es zeigt:

Fig. 1 eine Lageranordnung, bei der zwischen dem Aussenring des Wälzlagers und der Bohrungswand ein Federband eingefügt ist,

Fig. 2 ein Detail der Lageranordnung nach Fig. 1,

Fig. 3 ein aus einem geraden Stahlband bestehendes Federband,

Fig. 4 einen Schnitt entlang der Linie IV-IV in Fig. 3,

Fig. 5 einen Schnitt entlang der Linie V-V in Fig. 4.

Mit 1 ist ein Lagerschild bezeichnet, welches eine Bohrung 2 zur Aufnahme eines Wälzlagers 3 aufweist. Das Wälzlager sitzt mit seinem Innenring 4 auf einer Welle 5. Zwischen dem Aussenring 6 und der Wand der Bohrung 2 ist ein Federband 7 eingefügt.

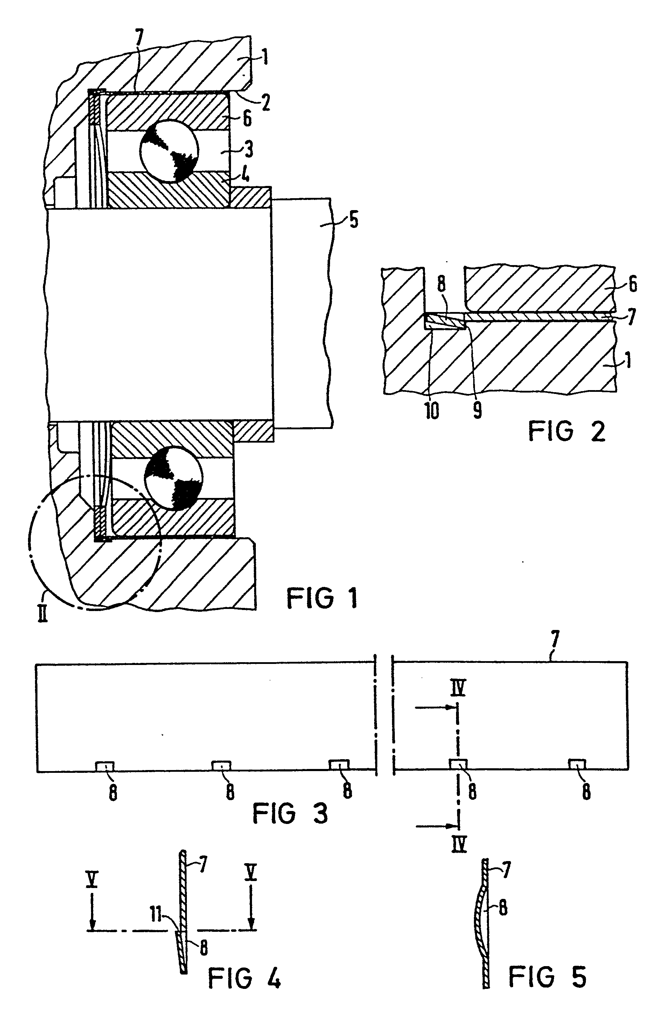

Wie aus der Detaildarstellung in Fig. 2 zu erkennen ist, sind an der einen Längsseite des Federbandes 7 Sicken 8 radial nach aussen vorstehend eingeprägt und hinter der Kante 9 einer in der Bohrung 2 vorgesehenen Freidrehung 10 verhakt. Das Federband 7 wird dadurch in axialer Richtung in der Bohrung 2 gesichert. Anstelle der Sicken 8 kann auch ein in die Freidrehung 10 eingreifender, radial vorstehender, umlaufender Rand an dem Federband 7 vorgesehen werden.

Das in Fig. 3 dargestellte Federband 7 besteht aus einem flachen, ungebogenen, somit geraden Stahlblechstreifen. An der einen Längsseite des Stahlblechstreifens sind mehrere Sicken 8 eingeprägt. Diese Sicken sind bogenförmig (Fig. 5) aus der Ebene des Stahlblechstreifens herausgedrückt. An der zur Mitte des Stahlblechstreifens gerichteten Seite der Sicken 8 sind diese in ihrem Mittelteil gegenüber dem eben verlaufenden Teil des Stahlblechstreifens abgeschnitten, so dass eine scharfe Kante 11 entsteht (Fig. 4), die sich glatt an der Kante 9 der Freidrehung 10 anlegen kann und so einen guten axialen Halt des Federbandes gewährleistet.

Das ebene Federband 7 wird in die Bohrung 2 eingelegt. Dabei gelangen die Sicken 8 in die Freidrehung 10, und gleichzeitig legt sich das Federband 7 an der runden Bohrungswand an. Lediglich im Bereich seiner beiden Enden liegt das Federband 7 nicht satt an der Bohrungswand an, sondern diese Enden verlaufen auf einer kurzen Länge geradlinig. Beim Einbringen des Wälzlagers 3 werden diese geradlinig verlaufenden Endbereiche des Federbandes 7 dann an die Bohrungswand angedrückt. Damit liegen diese Endbereiche unter einer Vorspannung an dem Aussenring 6 des Wälzlagers 3 an und klemmen diesen fest, so dass er sich nicht drehen kann. Das Federband 7 stellt gleichzeitig eine abriebfeste Auskleidung der Bohrung 2 dar.

## Patentansprüche

1. Lageranordnung mit einem in der Bohrung einer Lageraufnahme angeordneten Wälzlager, bei welcher Anordnung zwischen dem Aussenring (6) des Wälzlagers (3) und der Bohrungswand ein in Umfangsrichtung mit einem Trennschlitz versehenes Federband (7) eingefügt ist, dadurch gekennzeichnet, dass das Federband (7) aus einem geraden, im wesentlichen flachen, in seiner Länge dem Bohrungsumfang entsprechenden gehärteten Stahlband besteht.

2. Lageranordnung nach Anspruch 1, dadurch gekennzeichnet, dass an der einen Längsseite des Federbandes (7) nach aussen aus dessen Ebene vorstehende Sicken (8) vorgesehen sind, die in eine an der Bohrungswand ausgebildete Freidrehung (10) eingreifen.

## Claims

1. Bearing arrangement having a roller bearing arranged in the bore hole of a bearing receiver, in which arrangement a spring band (7), provided with a separating slit in the direction of the circumference, is inserted between the outer ring (6) of the roller bearing (3) and the bore wall, characterised in that the spring band (7) consists of a straight, substantially flat, hardened steel band, corresponding in length to the bore hole circumference.

2. Bearing arrangement according to claim 1, characterised in that protrusions (8) are provided on one long side of the spring band (7) which protrude outwards from the plane of said spring band, and which engage in a recess (10) formed on the bore wall.

## Revendications

1. Montage de palier avec un roulement disposé dans l'alésage d'un logement de palier, montage dans lequel une bande à ressort (7), pourvue d'une fente de séparation dans le sens circonférentiel, est insérée entre la bague extérieure (6) du roulement (3) et la paroi de l'alésage, caractérisé en ce que la bande à ressort (7) est constituée d'une bande d'acier trempé, qui est rectiligne, essentiellement plane et dont la longueur correspond à la circonférence de l'alésage.

2. Montage selon la revendication 1, caractérisé en ce que des languettes (8), faisant saillie vers l'extérieur par rapport au plan de la bande à ressort (7), sont prévues sur un côté longitudinal de cette bande et pénètrent dans un dégagement (10) réalisé sous forme d'une gorge dans la paroi de l'alésage.

FIG 1

FIG 2

FIG 3

FIG 4

FIG 5